# EUROPEAN PATENT APPLICATION

(11) **EP 1 843 556 A1**
(43) Date of publication of application: **10.10.2007**
(21) Application number: 06705547.5
(22) Date of filing: 24.01.2006
(51) Int. Cl.: H04M 1/02

(54) **A MOBILE TERMINAL AND BOOT METHOD THEREOF**

(30) Priority: 28.01.2005 CN 200510004917
(71) Applicant: Beijing Watch Data System Co. Ltd., Beijing 100015 (CN)
(72) Inventor: WANG, Youjun, Beijing Watch Data System Co,Ltd., Capital Airport Road, Chaoyan District, Beijing 100015 (CN); GAO, Xiang, Beijing Watch Data System Co,Ltd., Capital Airport Road, Chaoyan District, Beijing 100015 (CN)
(74) Representative: Samson & Partner
(86) International application number: PCT/CN2006/000126
(87) International publication number: WO 2006/079281

(57) **Abstract**

The present invention relates to a mobile terminal adapting a smart card as a carrier of operating system and main application system. It differs from conventional mobile terminal in that the mobile terminal of the present invention uses a smart card as the carrier of operating system and main application system. That is, the operating system and main application system of the mobile terminal are stored in the smart card instead of in the memory of the mobile terminal. In this mode, the mobile terminal is driven by the smart card and the mobile terminal can be recognized as a peripheral equipment of the smart card. This technology makes it possible for the mobile communication provider to sell the operating system of the mobile terminal in company with the card; makes the mobile terminal have unified architecture and operating system; makes the mobile terminal user interchangeably use, add or reduce attachments of the mobile terminal, for example, a display screen, a pick-up head and so on; and makes the mobile communication provider develop the application system on the unified foreground and background.

## Description

### Field of the Invention

The present invention relates to the field of communication, in particular to a mobile terminal which uses a smart card as a carrier of an operating system and a main application system, and a boot method thereof.

### Description of the Related Art

With the mushrooming of the number of mobile communication subscribers, continuously enhancement in the function of mobile terminals in recent years, and the coming of the third generation of mobile communication technology, the mobile terminal has become an important personal information processing device like the PC. An operating system of the mobile terminal has also become a technology which influences the state information security, independent intellectual property and further development of the information industry, similar to the operating system of the PC.

At present, there are 300 million mobile terminal users in China, in which over 50 million of them were newly added in 2003. Now the China Mobile Communications Corporation and the China Unicom Corporation are respectively the first and the third largest mobile communication operators in the world.

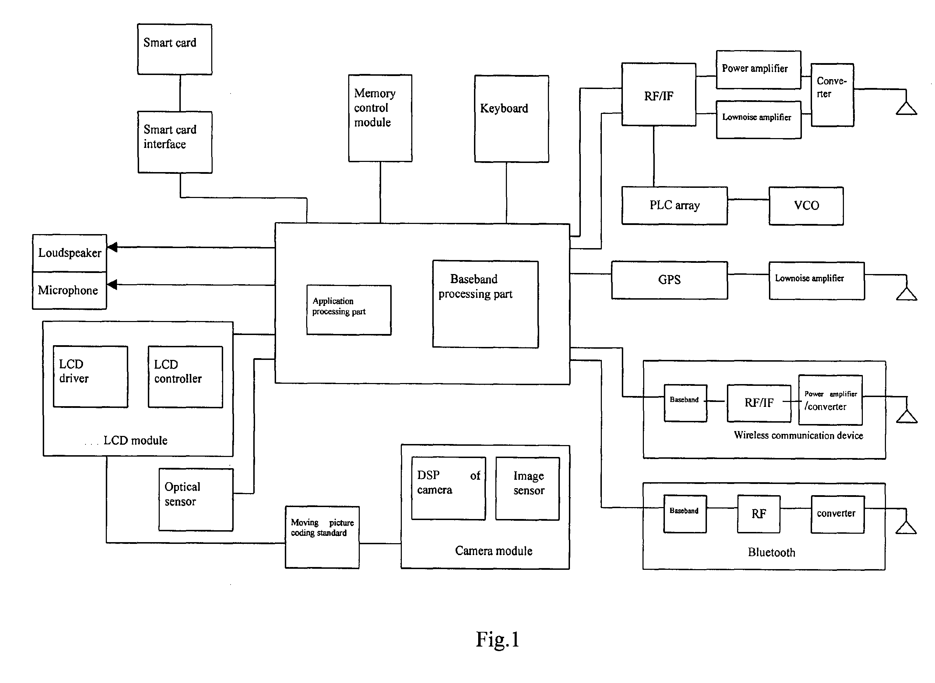

Fig.1 is a schematic view showing the system architecture of a mobile terminal in the prior art. As shown in Fig.1, a functional module inside the mobile terminal comprises two main parts: a base band processing part and an application processing part. The base band processing part controls radio frequency port part of the mobile communication network and corresponding protocol stack, and the application processing part controls the parts which are relative to the user application, such as a video frequency, an audio frequency, a display, a keyboard and a multimedia ports and a user interface.

A base band processing CPU and an application processing CPU can be connected by a UART, a DPRAM (dual port RAM) or other manners. The inner structure of the two kinds of CPU generally comprises one core of the CPU and a digital signal processor which operate in cooperation with each other by a parallel IO and in an interrupt mode.

One characteristic concerning the expansion of the mobile terminal market and its applications is the diversity of the mobile terminal. The diversity of the mobile terminal is not only represented by the styles and functions of the mobile terminal, but also lies fundamentally in the diversity of the system architecture and operating system of the mobile terminal. This diversity, in one respect, will provide more choices for the user of the mobile terminal. However, in the other respect, it also brings about difficulties for the mobile communication operator, the mobile end user and the mobile communication value-added service provider. The difficulties can mainly be summed up by the following aspects:
1. The mobile communication operators can not master the technology and platform of the mobile terminal. Thus, it is difficult for the mobile communication operator to expediently spread the applications, to realize a consumption mode that charges in accordance with contents and flow, to adjust the price of the mobile terminal in order to increase user amount, and to overcome security threatens by technical measures in a situation that mobile terminal viruses and other security threatens will emerge in company with the function of the mobile terminal becoming more and more powerful.
2. Mobile communication value-added service providers need to confront to diversified system architectures and operating systems of the mobile terminal. Thus, the mobile communication value-added service providers should provide different versions for a same service, which increases the cost of development, maintenance and support.
3. The mobile terminal users have to pay a high price for the diversified mobile terminal, and are required to be adapted to and learn the different user interfaces of the mobile terminal and the using skills thereof. Some services have to be abandoned if the mobile terminal is replaced, or the mobile terminal has to be replaced for new services. In addition, accessories and functions thereof for the mobile terminal can not be selected and interchangeably used at will.

Therefore, from the pointes of view of the mobile communication operator, the mobile communication end user and the mobile communication value-added service provider, the mobile terminal should have a unified system architecture and operating system. More specifically, the mobile communication operator, the mobile communication end user and the mobile communication value-added service provider all need a powerful technical instrument to promote the unification of the system architecture and the operating system of the mobile terminal.

### Summary of the Invention

One aspect of the present invention is to use a smart card as a carrier of an operating system and a main application system of a mobile terminal, and drive the whole mobile terminal by the smart card with the mobile terminal as a peripheral equipment of the smart card.

The other aspect of the present invention is to provide a mode in which a smart card carries an operating system and a main application system of a mobile terminal, by which a mobile communication operator can sell the operating system and the main application system of the mobile terminal in company with the smart card. Thus, a technical instrument is provided to promote the unification of the system architecture and the operating system of the mobile terminal.

In order to achieve the above aspects, the present invention provides a mobile terminal comprising:
a base band signal processor for processing base band signals of the mobile terminal; an I/O device for inputting corresponding data into or outputting corresponding data from the mobile terminal; a memory for storing corresponding data of the mobile terminal; and a smart card detachably mounted in the mobile terminal, wherein the mobile terminal further comprises:
a bus controller which is connected to the mobile terminal and the smart card and is used for a data exchange between the smart card and other devices of the mobile terminal;
the smart card carries an operating system which is used to operate the other devices of the mobile terminal.

The bus controller comprises:
a base band control hub which performs a communication with the base band signal processor of the mobile terminal and implements an information exchange between the smart card and the base band signal processor of the mobile terminal;
an I/O control hub which performs a communication with the I/O device of the mobile terminal and implements an information exchange between the smart card and the I/O device of the mobile terminal;
a memory control hub which performs a communication with the memory of the mobile terminal and implements an information exchange between the smart card and the memory of the mobile terminal; and
a smart card control hub which implements an information exchange between the base band control hub, the I/O control hub, the memory control hub and the smart card.

The communication between the smart card and the other devices of the mobile terminal is implemented by a dual port RAM.

The addresses and the data buses of two ports of the dual port RAM are connected respectively to the base band signal processor and the base band control hub.

The memory may comprise one of the following devices: an externally extended ROM, a RAM, a FLASH, a ScanDisk, a MMC and a U-Disk.

The bus controller is also used for receiving an interrupt signal from a user interface device of the mobile terminal and delivering the interrupt signal to the operating system in the smart card for processing.

The user interface device may be one of the following devices: a microphone, a keyboard, a stylus pen and a touch screen.

The present invention also provides a boot method of a mobile terminal comprising of
a step S1, for checking the settings of a hardware and a firmware of the mobile terminal;
a step S2, for loading and setting an interrupt service program and a device driver;
a step S3, for initializing the bus controller of the mobile terminal and performing a power management;
a step S4, for transmitting the detected information of the device to a smart card of the mobile terminal and handing over the control authority to the smart card.

In the process of the above method, information related to the checking and the loading is synchronously displayed in the system.

According to the present invention, a smart card with a high speed bus interface and a bus controller that controls the communication between the smart card and the external bus are used, by which the smart card may implement a communication with mobile terminals, such as a base band controller, a display, a keyboard, a microphone and a loudspeaker via the external bus. Thereby, the whole mobile terminal is driven.

The smart card used in the present invention has sufficient computing and storage capacity, whereby it is adequate for the smart card to carry the operating system of the mobile terminal and provide an operating environment for the operating system of the mobile terminal.

The present invention has the following advantages over the conventional mobile terminal:
1. The operating system and the main application system of the mobile terminal are carried on the smart card. Therefore, an operator can sell the operating system and the main application system of the mobile terminal in company with the smart card at the time of selling the smart card.
2. A standard and safe operating system which takes a smart card as a carrier can resolve the security problem to a largest extent, thereby the operator is provided with a safe operating environment.
3. Attachments and functions thereof can not be selected and interchangeably used at will by the user of the mobile terminal.
4. A value-added service provider can only develop services for a unified operating system of the mobile terminal, thus the cost of development, maintenance and support is reduced.

### Brief Description of the Drawings

Fig.1 is a schematic view showing the system architecture of a conventional mobile terminal;
Fig.2 is a schematic view showing the system architecture of a mobile terminal which takes a smart card as a carrier of an operating system and a main application system of a mobile terminal according to the present invention;
Fig.3 is a schematic view showing the system architecture of a terminal /smart card bus controller according to the present invention;
Fig.4 is a flow chart showing an energizing and booting process of the mobile terminal according to the present invention.

### DETAILED DESCRIPTION OF THE PREFERRED EMBODIMENTS

Embodiments of the present invention will be described in detail with reference to the drawings.

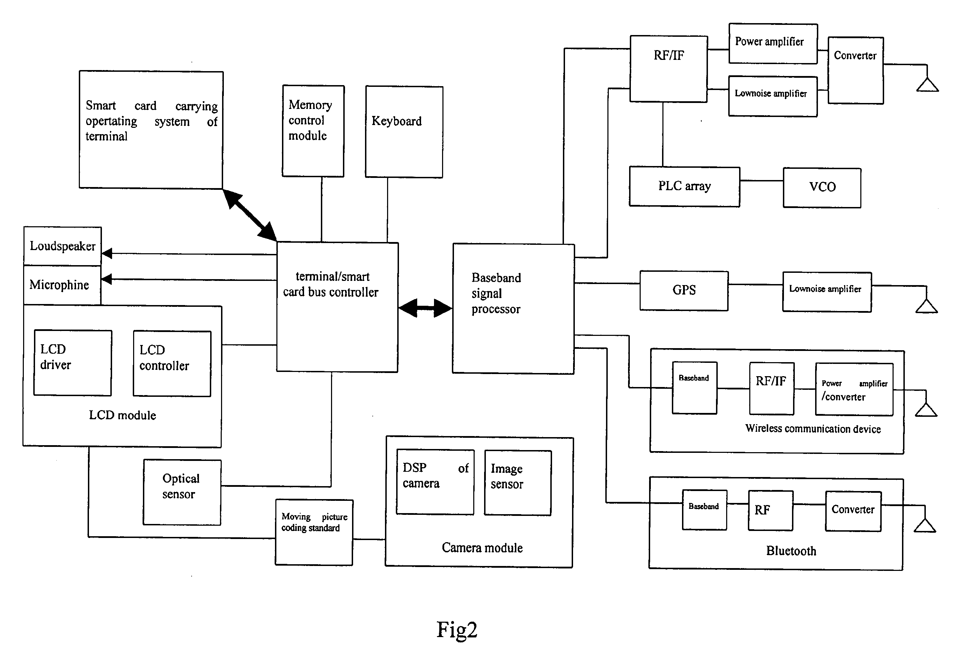

Fig.2 is a schematic view showing the system architecture of a mobile terminal which takes a smart card as a carrier of an operating system and a main application system of a mobile terminal according to the present invention.

The mobile terminal comprises:
a base band signal processor for processing base band signals of the mobile terminal;
an I/O device for inputting corresponding data into or outputting corresponding data from the mobile terminal;
a memory for storing corresponding data of the mobile terminal;
a smart card detachably mounted in the mobile terminal; and
a bus controller which is connected to the mobile terminal and the smart card and is used for a data exchange between the smart card and other devices of the mobile terminal.

The smart card carries an operating system which is used to operate the other devices of the mobile terminal.

Compared with the conventional system architecture, the new system architecture is almost the same in the base band processing part. However, the communication between the base band processing part and the application processing part is implemented by a terminal/smart card bus controller. In the new structure, the application processing may be directly perceived as a replacement of the conventional application processing CPU and corresponding operating system code by the smart card and corresponding code in the smart card. Similarly, the mutual communication between this part and the base band processing part is implemented by the terminal/smart card bus controller.

The communication between the terminal/smart card bus controller and the base band processing part is coordinated by a module--a base band control hub. The specific communication mode may be a UART, a DPRAM or other modes.

The terminal/smart card bus controller comprises four modules which are a base band control hub, an I/O control hub, a smart card control hub and a memory control hub.

The terminal/smart card bus controller is used for the communication in the new system architecture between the smart card, the operating system which is operating on the smart card and the mobile terminal which functions as a peripheral equipment of the smart card. The communication control mode basically adopts a bus control and an interrupt mode. The I/O control hub, which is a module in the terminal/smart card bus controller, receives interrupt signals from various user interface equipments such as a microphone, a keyboard, a stylus pen or a touch screen, and hand over the received control information and data to the operating system in the smart card to be processed through the smart card control hub which is another module. In another respect, the smart card control hub can transmit commands, data or address information of the operating system in the smart card to corresponding user interface equipments through the I/O control hub. For example, multimedia related data can be transmitted to a loudspeaker.

The terminal/smart card bus controller is also used for the management in the new system architecture to all the memories through the memory control hub. The memory may be an externally extended ROM, a RAM or a FLASH, and various types of memory card which can be freely plugged in and out by a user, such as a ScanDisk, a MMC(multimedia card) and a U-Disk and so on. The memory control hub can receive commands, data or address information transmitted by the smart card control hub from the smart card, and implement a data access and control to various memories. In addition, according to the above commands, the memory control hub can transmit the addressed data and control information to the operating system in the smart card through the smart card control hub. The mobile terminal may be a mobile telephone.

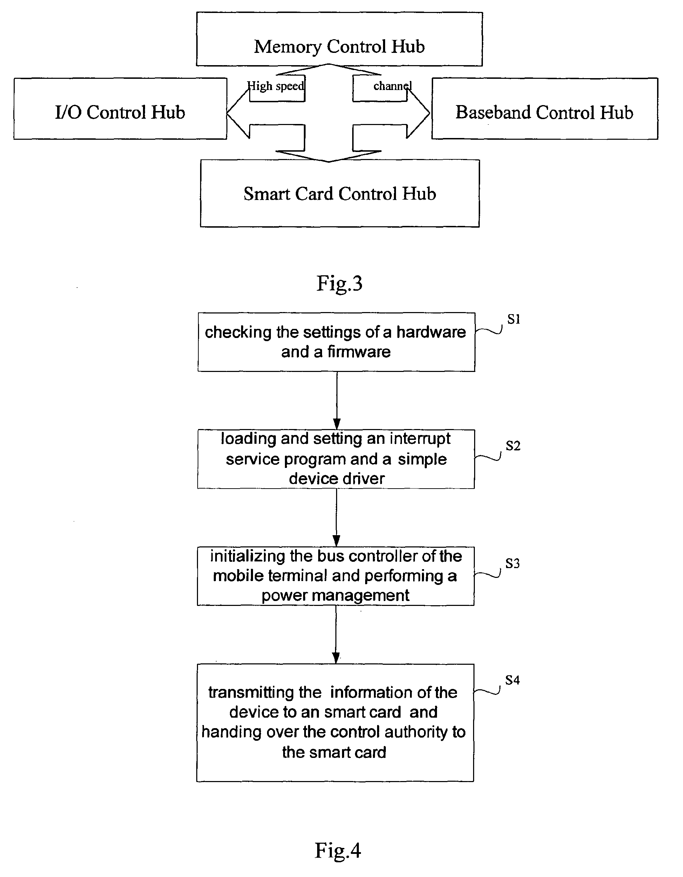

Fig.3 is a schematic view showing the system architecture of a terminal /smart card bus controller according to the present invention.

As shown in Fig.3, the terminal/smart card bus controller plays a key position in hardware in the system architecture of the present invention, and is used for the coordination of the operations of the base band processing part and the application processing part. As shown in Fig.3, the terminal/smart card bus controller comprises the following four modules:
a base band control hub which performs a communication with the base band signal processor of the mobile terminal and implements an information exchange between the smart card and the base band signal processor of the mobile terminal;
an I/O control hub which performs a communication with the I/O device of the mobile terminal and implements an information exchange between the smart card and the I/O device of the mobile terminal;
a memory control hub which performs a communication with the memory of the mobile terminal and implements an information exchange between the smart card and the memory of the mobile terminal; and
a smart card control hub which implements an information exchange between the base band control hub, the I/O control hub, the memory control hub and the smart card.

In this new system architecture, the terminal/smart card bus controller is used for the communication between the smart card, the operating system which is operating on the smart card and the mobile terminal which functions as a peripheral equipment of the smart card. In particular, the terminal/smart card bus controller is used for the communication between the base band processing part and the operating system carried on the smart card. The specific communication mode may be a UART, a DPRAM (dual port RAM) or other modes. When the DPRAM is used as the communication mode, the addresses and data buses of two ports of the DPRAM are respectively connected to the "base band process" part of the mobile terminal and the base band control hub of the terminal/smart card bus controller. The share of communication and data can be implemented by a DPRAM share protocol which is commonly used at present.

In this new system architecture, the terminal/smart card bus controller is used for receiving interrupt signals from various types of user interface equipments, such as a microphone, a keyboard, a stylus pen, or a touch screen, and handing over all the required data to the operating system in the smart card to be processed. Specifically, when a user uses these peripheral equipments, for example by pressing the keyboard, writing or touching the touch screen, such equipments will generate interrupt signals. The I/O control hub in the terminal/smart card bus controller receives the interrupt signals and related data, and transmits them to the operating system in the smart card. The operating system goes into corresponding interrupt service routine to deal with the user's request according to the interrupt type and related data. The I/O control hub is used for transmitting commands, data or address information of the operating system in the smart card to corresponding user interface equipments. For example, multimedia related data can be transmitted to a loudspeaker.

The memory control hub in the terminal/smart card bus controller is mainly used for the coordination of various store areas of the mobile terminal and those of the smart card, and for the explanation, access and control of the addresses/data/commands. The memory may be an externally extended ROM, a RAM or a FLASH, and various types of memory card which can be freely plugged in and out by a user, such as a ScanDisk, a MMC(multimedia card) and a U-Disk. The memory control hub can receive command, data or address information transmitted by the smart card control hub from the smart card, and implement a data access and control to various memories. In addition, according to the above commands, the memory control hub can transmit the addressed data and control information to the operating system in the smart card through the smart card control hub.

The smart card control hub in the terminal/smart card bus controller is used for the communication and control between the smart card and the control hubs. Specifically, the smart card control hub transmits the communication and control information between the smart card and the base band processing part, for example the address/data and protocol of the DPRAM, to the base band control hub, or obtains corresponding information of the address/data and protocol from the base band control hub. The smart card control hub obtains interrupt signals and related data from the I/O control hub and transmits them to the operating system carried in the smart card. The smart card control hub also transmits data from the operating system of the smart card for controlling the I/O device to the I/O control hub. The smart card control hub further transmits data from the operating system of the smart card for operating and controlling external memory to the memory control hub, and transmits data from the memory control hub to the operating system in the smart card.

To sum up, the bus controller coordinates and controls every device connected to the bus including the smart card that carries the operating system, and ensures that the commands, data and address information can smoothly flow.

The initialization of the terminal/smart card bus controller is performed after each time of the energizing and startup of the mobile terminal, and is controlled by a bootloader of the mobile terminal in the new system architecture.

Hereinafter, the procedure of the energizing and startup of the mobile terminal will be described.

The energizing and startup of the mobile terminal according to the present invention is carried out by the bootloader in the terminal. The main function of the bootloader is to initialize all kinds of hardware of the terminal, test the coordination of the hardware and software, and transmit related parameters of the hardware and software of the terminal to the smart card which carries the operating system and main application system of the terminal.

Specifically, a flow chart of an energizing and boot process of the mobile terminal according to the present invention is shown in Fig.4. The process comprises:
a step S1, for checking the settings of a hardware and a firmware of the mobile terminal;
a step S2, for loading and setting an interrupt service program and a device driver;
a step S3, for initializing the bus controller of the mobile terminal and performing a power management;
a step S4, for displaying synchronously the information related to the checking and the loading in the system during the course of the above steps; and
a step S5, for transmitting the detected information of the device to an smart card of the mobile terminal and handing over the control authority to the smart card.

The main function of the above steps is to check and test the memory, the display, the keyboard and other input devices, the smart card carrying the operating system, the base band processing part and so on. In addition, the related information is transmitted to the smart card carrying the operating system and the main application system of the terminal, in which the type, capacity, speed of the memory are checked, and the display is checked in the items of display mode (black and white/color), display resolution, and frequency bound. When the above process is over, the operating system in the smart card can know the condition of the peripheral equipments of the system, then a driver is automatically configured, the user will be promoted to download a corresponding driver from the network when it is not found;

The above devices and other corresponding controllers are initialized;

Fundamental control function for hardware interrupt services is provided;

A plug and play function of various peripheral equipments is supportable;

Setting from the user is supportable. For example, the user can preset information such as the type of the device, or disable the "plug and play" and "automatic device checking" functions. Then it is unnecessary for the mobile terminal to take time to implement the device checking, by which the user will have a shorter boot time for the mobile terminal;

A dynamic update of the bootloader itself is supportable.

During the course of the above checking and configuration of the bootloader, related information may be displayed synchronously. Thus it is convenient for the user to know process information concerning the boot of the device.

Although preferred embodiments of the present invention has been shown and described, it would be appreciated by those skilled in the art that changes may be made in these embodiments without departing from the principals and spirit of the invention, the scope of which is defined in the claims and their equivalents.

## Claims

1. A mobile terminal, comprising a base band signal processor for processing base band signals of the mobile terminal; an I/O device for inputting corresponding data into or outputting corresponding data from the mobile terminal; a memory for storing corresponding data of the mobile terminal; and a smart card detachably mounted in the mobile terminal, **characterized in that** the mobile terminal further comprises:
a bus controller which is connected to the mobile terminal and the smart card and is used for a data exchange between the smart card and other devices of the mobile terminal; and
the smart card carries an operating system which is used to operate the other devices of the mobile terminal.

2. The mobile terminal according to claim 1, **characterized in that** the bus controller comprises:
a base band control hub which performs a communication with the base band signal processor of the mobile terminal and implements an information exchange between the smart card and the base band signal processor of the mobile terminal;
an I/O control hub which performs a communication with the I/O device of the mobile terminal and implements an information exchange between the smart card and the I/O device of the mobile terminal;
a memory control hub which performs a communication with the memory of the mobile terminal and implements an information exchange between the smart card and the memory of the mobile terminal; and
a smart card control hub which implements an information exchange between the base band control hub, the I/O control hub, the memory control hub and the smart card.

3. The mobile terminal according to claim 2, **characterized in that** the communication between the smart card and the other devices of the mobile terminal is implemented by a dual port RAM.

4. The mobile terminal according to claim 3, **characterized in that** the addresses and the data buses of two ports of the dual port RAM are connected respectively to the base band signal processor and the base band control hub.

5. The mobile terminal according to claim 2, **characterized in that** the memory comprises one of the following devices: an externally extended ROM, a RAM, a FLASH, a multimedia card and a U-Disk.

6. The mobile terminal according to claim 1, **characterized in that** the bus controller is also used for receiving an interrupt signal from a user interface device of the mobile terminal and delivering the interrupt signal to the operating system in the smart card for processing.

7. The mobile terminal according to claim 6, **characterized in that** the user interface device is one of the following devices: a microphone, a keyboard, a stylus pen and a touch screen.

8. A boot method of a mobile terminal as defined in claim 1, comprising of
a step S1, for checking the settings of a hardware and a firmware of the mobile terminal;
a step S2, for loading and setting an interrupt service program and a device driver;
a step S3, for initializing the bus controller of the mobile terminal and performing a power management;
a step S4, for transmitting the detected information of the device to a smart card of the mobile terminal and handing over the control authority to the smart card.

9. The boot method according to claim 8, **characterized in that** information related to the checking and the loading is synchronously displayed in the system in the above process.
